Europäisches Patentamt

European Patent Office

Office européen des brevets

(19)

(11) Publication number: **0 213 767 B1**

# EUROPEAN PATENT SPECIFICATION

(12)

(45) Date of publication of patent specification: **15.05.91** (51) Int. Cl.5: **G08C 19/02**

(21) Application number: **86305961.4**

(22) Date of filing: **01.08.86**

(54) **Current loop arrangements.**

(30) Priority: **12.08.85 US 764913**

(43) Date of publication of application:
**11.03.87 Bulletin 87/11**

(45) Publication of the grant of the patent:
**15.05.91 Bulletin 91/20**

(84) Designated Contracting States:
**DE FR GB IT SE**

(56) References cited:
**EP-A- 0 101 528**
**US-A- 4 520 488**

(73) Proprietor: **INTERNATIONAL CONTROL AUTO-MATION FINANCE S.A.**
**16 Rue des Bains**
**Ville de Luxembourg(LU)**

(72) Inventor: **Sterling, Edward Lee, Jr.**
**3380 Warren Road**
**Cleveland Ohio 44111(US)**
Inventor: **Thompson, William Lee**
**15364 GAR Highway**
**Montville Ohio 44064(US)**

(74) Representative: **Cotter, Ivan John et al**
**D. YOUNG & CO. 10 Staple Inn**
**London WC1V 7RD(GB)**

Rank Xerox (UK) Business Services

## Description

This invention relates to current loop arrangements.

Two-wire analog transmission systems are known (see e.g. US-A-4520488).Such systems include a transmitter which is connected to a power supply by two wires which form a current loop. The transmitter includes, as at least one of its features, a transducer which senses a condition such as pressure or temperature. This condition is known as a process variable (PV).

The power supply is connected to the two wires to close the current loop. It is also known to provide a resistor in the current loop. The transmitter amplifies the signal from its transducer and this amplified signal is used to draw a certain current from the power supply which is proportional or otherwise related to the process variable. It is also known to draw from a minimum of 4 mA to a maximum of 20 mA. The current between 4 and 20 mA passes through the resistor to produce a voltage drop across the resistor. This voltage drop can be measured to give a value for the process variable.

It is noted that the 4 mA minimum current is required to energise the circuitry of the transmitter. Any excess current above this 4 mA level is taken as a value which can be used to determine the process variable.

It is known that such 4-20 mA two-wire systems have an accuracy which is limited to around 0.1% at best. These systems are also essentially unidirectional with the transmitter being essentially uncontrolled and transmitting continuously.

The transmitters in such circuits are generally limited in accuracy to about 0.1% and their usefulness is limited to only continuous reading and sensing of the process variable.

According to one aspect of the present invention there is provided a current loop arrangement comprising:
a power supply for supplying a current at various levels;
a current loop connected to the power supply for carrying the current levels at a selected voltage level;
a current regulating circuit connected to the current loop for driving the current levels from the power supply according to a voltage applied to an input of the current regulating circuit;
a transmitter having microprocessor means with a first port connected to an input of the current regulating circuit for applying a continuous voltage level to the current regulating circuit which is proportional to a process parameter measured by the transmitter;
a digital circuit for modulating the selected voltage level on the current supply by voltage pulses for carrying digital information to the current loop, the microprocessor means having a second port for receiving serial communication voltage pulses; and an on-line serial communication interface for establishing communication with the microprocessor from the current loop, the interface comprising an amplifier having a first input connected to one line of the current loop, an output connected to the second port of the microprocessor means for applying the serial communication voltage pulses, and a second input connected or capable of being connected to a source of fixed voltage at a selected small level whereby modulations of the selected voltage level by the digital circuit cause the formation of larger voltage pulses forming the serial communication voltage pulses of the microprocessor means.

According to a second aspect of the present invention there is provided an on-line serial communication interface for a current loop arrangement which includes a power supply for supplying current at varying levels, a current loop connected to the power supply for carrying the current levels, a current regulating circuit connected to the current loop for drawing the current level from the power supply, and a transmitter having microprocessor means with a first port connected to an input of said current regulating circuit for applying a continuous analog signal to the current regulating circuit for drawing a current level corresponding to a process parameter measured by the transmitter, the microprocessor means having a second port for receiving a serial communication voltage pulse signal, wherein the interface comprises an operational amplifier having its output connected to the second port of the microprocessor means, a first input connected to a selected fixed source of voltage, and a second input connected to one line of the current loop for receiving current pulses from the current loop, which current pulses respond to the serial communication voltage pulse signals to the microprocessor means.

A preferred embodiment of the invention described herein below utilises microprocessor technology to improve the overall accuracy and expand the usefulness of transmitter devices, and to provide an interface for establishing digtal communications from a two-line current loop to a transmitter of the current loop. The preferred embodiment provides an apparatus for interfacing a computer or hand-held terminal with a current loop for digital communications from a two-wire current loop transmitter while the transmitter is still on-line (sending analog information) to a controller or some other monitoring device. The preferred embodiment provides an on-line serial communication interface to a transmitter having a microprocessor, from a current loop connected to the transmitter, which is simple in design, rugged in construction and economical to manufacture.

The invention will now be further described, by way of illustrative and non-limiting example, with reference to the accompanying drawing, in which:

Figure 1 is a block diagram showing a current loop arrangement having a communication device such as a computer or hand-held terminal connected to the current loop; and

Figure 2 is a schematic block diagram of an off-line serial communication interface showing its interconnection with a transmitter of the current loop arrangement illustrated in Figure 1 to form a current loop arrangement embodying the present invention.

The drawing shows a current loop arrangement forming a preferred embodiment of the present invention, which includes an on-line serial communication interface between a transmitter 10, of a 4-20 mA loop, and the remainder of the loop, which includes lines 12 and 14, and a power supply 16. As is known, one of the lines, for example the line 14, may include a resistor R0 which has a voltage drop thereacross proportional to a current flowing in the lines 12 and 14. The transmitter 10 may include a transducer such as a pressure or temperature transducer (not shown) which receives a process variable PV. The transducer may be connected to a microprocessor 18 in the transmitter 10 which controls the amount of current to be drawn from the power supply 16 on the lines 12 and 14.

The voltage drop across the resistor R0 is measured by an analog-to-digital (A/D) converter 20. This voltage drop can be displayed on a display unit 22 as a measurement of the process variable PV.

A communication device 24 is connected to the current loop line 14 by connecting lines 26 and 28. The communication device 24 is a digital circuit such as a computer, a microprocessor or a hand-held terminal. The device 24 receives digital information in the form of voltage pulses on the lines 26 and/or 28 for establishing digital communication with the current loop. The device 24 may be an RS-232C device. An RS-232C device is a serial device which sends logical signals one bit at a time. A logic high is between +3 and +12 volts and a logic low is between -3 and -12 volts.

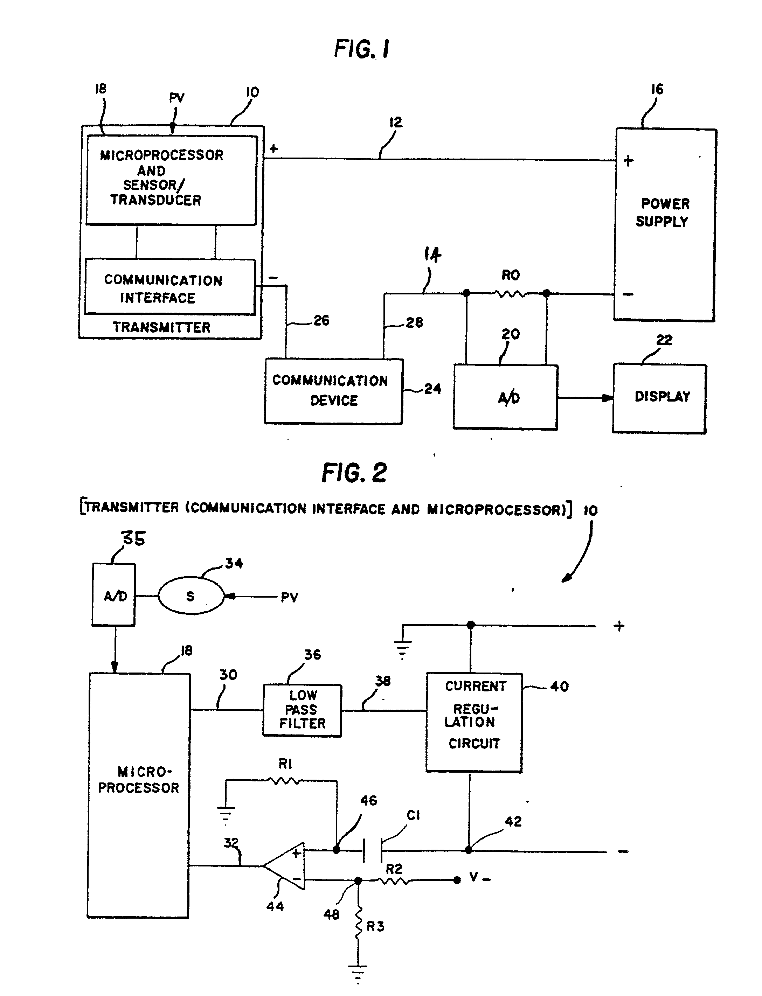

Figure 2 illustrates the on-line serial communication interface of the preferred embodiment of the present invention.

As shown in Figure 2, the transmitter 10 comprises a microprocessor 18 which has a first or output port 30 and a second or input port 32. A process parameter PV is sensed by a sensor 34, such as a differential pressure or temperature sensor. The sensor 34 generates an analog signal such as a voltage level which is converted into a digital signal by an analog-to-digital (A/D) converter 35. The digital signal is supplied to the microprocessor 18, which outputs a digital signal corresponding to the process parameter on the port 30. This signal is in the form of a voltage pulse train at a fixed frequency but with a duty cycle which varies according to the process parameter PV. For low pressure or temperature values, for example, a pulse train having very short pulse durations within a fixed time period is generated and applied to the line 30. For higher value signals from the sensor 34, broader pulses are generated again within the fixed time period for each pulse.

A low pass filter 36 is connected to the port 30 and generates a continuous voltage on an output 38 thereof. The level of this voltage is proportional to the duty cycle of the pulses at the port 30 so that the low pass filter 37 acts as a digital-to-analog converter. The voltage is applied via a line 38 to a current regulation circuit 40 which may be of known design and which draws an amount of current from the power supply 16 on the current loop, made up of the lines 12 and 14, which is proportional to the signal from the low pass filter 37, and thus in turn proportional to the process parameter PV.

The microprocessor 18 may also receive serial digital pulses on its second port 32. This can be used for receiving digital communication from the current loop made up of the lines 12 and 14. It is noted that this digital communication can be superimposed on the analog information which is already on the current loop.

The two signals are superimposed at a point 42.

In an idle state (no communication) the port 32 is at a fixed voltage. To establish communication, the microprocessor 18 must receive voltage pulses. These voltage pulses are produced by the digital circuit 24 in the form of small voltage modulations on the current loop, as will be explained later.

To establish communication from the current loop made up of the lines 12 and 14, the embodiment shown in Figure 2 includes an operational amplifier 44 which has an output connected to the second port 32 of the microprocessor 18.

When it is wished to commence digital communication from the loop 12, 14 to the microprocessor 18, a voltage on the loop is modulated by an amount which is less than 1 volt. These voltage pulses will appear at the point 42 and will be capacitively coupled by a capacitor C1 to a point 46 connected to one input (non-inverting or positive) of the operational amplifier 44. A point 48 connected to a second input (inverting or negative) of the amplifier 44 is held at a slight negative voltage produced by a resistive divider made up of resistors R2 and R3. This holds the output of the operational amplifier 44, which is connected directly to the input port 32 for the microprocessor 18, at a logical high until communication starts. The operational amplifier 44 acts as a comparator to convert the incoming pulses from the current loop 12, 14, which as noted above are at less than 1 volt, to 5 volt pulses that the microprocessor 18 needs to receive the digital information.

It has been found that with 0.7 volt pulses on the current loop, which do not disturb the analog information on the current loop, 5 volt pulses can be generated on the input port 32 for the microprocessor 18.

The point 46 is also connected to earth through a resistor R1 for proper functioning of the comparator 44.

A major advantage of the above-described embodiment of this present invention is that communication can be achieved while the transmitter is still on-line with a controller. This is possible because there is no effect on the current in the loop. Communication is effected by modulating a voltage in the loop.

## Claims

1. A current loop arrangement comprising:
   a power supply (16) for supplying a current at various levels;
   a current loop (12, 14) connected to the power supply (16) for carrying the current levels at a selected voltage level;
   a current regulating circuit (40) connected to the current loop (12, 14) for driving the current levels from the power supply (16) according to a voltage applied to an input of the current regulating circuit;
   a transmitter (10) having microprocessor means (18) with a first port (30) connected to an input of the current regulating circuit (40) for applying a continuous voltage level to the current regulating circuit which is proportional to a process parameter measured by the transmitter (10);
   a digital circuit (24) for modulating the selected voltage level on the current supply by voltage pulses for carrying digital information to the current loop (12, 14), the microprocessor means (18) having a second port (32) for receiving serial communication voltage pulses; and
   an on-line serial communication interface for establishing communication with the microprocessor (18) from the current loop (12, 14), the interface comprising an amplifier (44) having a first input (46) connected to one line of the current loop, an output connected to the second port (32) of the microprocesor means (18) for applying the serial communication voltage pulses, and a second input (48) connected or capable of being connected to a source of fixed voltage at a selected small level whereby modulations of the selected voltage level by the digital circuit (24) cause the formation of larger voltage pulses forming the serial communication voltage pulses of the microprocessor means (18).

2. A current loop arrangement according to claim 1, wherein the interface includes a voltage divider connected to the second input (48) of the amplifier (44) and made up of at least two resistors (R2, R3), and a further resistor (R1) connected between the first input (46) of the amplifier (44) and earth.

3. A current loop arrangement according to claim 1 or claim 2, including a low pass filter (36) connected between the first port (30) of the microprocessor means (18) and the input of the current regulating circuit (40).

## Revendications

1. Dispositif à boucle de courant comprenant :
   une alimentation (16) pour délivrer un courant à divers niveaux ;
   une boucle de courant (12, 14) connectée à l'alimentation (16) pour acheminer les niveaux de courant à un niveau de tension sélectionné ;
   un circuit de régulation de courant (40) connecté à la boucle de courant (12, 14) pour commander les niveaux du courant depuis l'alimentation (16) conformément à une tension appliquée à une entrée du circuit de régulation de courant ;
   un émetteur (10) comportant un moyen microprocesseur (18) avec un premier port (30) connecté à une entrée du circuit de régulation de courant (40) pour appliquer un niveau de tension continu au circuit de régulation de courant qui est proportionnel à un paramètre de processus mesuré par l'émetteur (10) ;
   un circuit numérique (24) pour moduler le niveau de tension sélectionné sur la fourniture du courant par des impulsions de tension pour acheminer les informations numériques vers la boucle de courant (12, 14), le moyen microprocesseur (18) comportant un second port (32) pour recevoir des impulsions de tension de transmission en série, et

une interface de transmission en série en ligne pour établir la communication avec le microprocesseur (18) depuis la boucle de courant (12, 14), l'interface comprenant un amplificateur (44) ayant une première entrée (46) connectée à une ligne de la boucle de courant, une sortie connectée au second port (32) du moyen microprocesseur (18) pour appliquer les impulsions de tension transmission en série, et une seconde entrée (48) connectée ou pouvant être connectée à une source de tension fixe à un niveau faible sélectionné, d'où il résulte que les modulations du niveau de tension sélectionné par le circuit numérique (24) entraînent la formation d'impulsions de tension plus larges formant les impulsions de tension de transmission en série du moyen microprocesseur (18).

2. Dispositif à boucle de courant selon la revendication 1, dans lequel l'interface comporte un diviseur de tension connecté à la seconde entrée (48) de l'amplificateur (44) et constituée d'au moins deux résistances (R2, R3), et comporte, de plus une résistance (R1) connectée entre la première entrée (46) de l'amplificateur (44) et la masse.

3. Dispositif à boucle de courant selon la revendication 1 ou la revendication 2, comportant un filtre passe-bas (36) connecté entre le premier port (30) du moyen microprocesseur (18) et l'entrée du circuit de régulation de courant (40).

**Ansprüche**

1. Stromschleifenanordnung mit

einer Stromquelle (16), um Ströme verschiedener Stärken zuzuführen,

einer Stromschleife (12, 14), welche an die Stromquelle (16) angeschlossen ist, um die Stromstärken bei einer ausgewählten Spannung zu tragen,

einem Stromregelschaltkreis (40), welcher an die Stromschleife (12, 14) angeschlossen ist, um die Stromstärken aus der Stromquelle (16) entsprechend einer an einem Eingang des Stromregelschaltkreises angelegten Spannung zu treiben,

einem Sender (10), der eine Mikroprozessoreinrichtung (18) mit einem ersten Anschluß (30) hat, welcher mit einem Eingang des Stromregelschaltkreises (40) verbunden ist, um einen kontinuierlichen Spannungswert an den Stromregelschaltkreis anzulegen, welcher proportional zu einem Prozeßparameter ist, welcher von dem Sender (10) gemessen wird,

einem digitalen Schaltkreis (24) zum Modulieren des ausgewählten Spannungswertes an der Stromquelle durch Spannungsimpulse, um die digitalen Informationen auf die Stromschleife (12, 14) zu bringen, wobei die Mikroprozessoreinrichtung (18) einen zweiten Anschluß (32) für den Empfang serieller Kommunikationsspannungsimpulse hat, und

einem seriellen on-line-Kommunikationsinterface zum Bereitstellen einer Kommunikation (Informationsaustausch) mit dem Mikroprozessor (18) von der Stromschleife (12, 14), wobei das Interface einen Verstärker (44) aufweist, welcher einen ersten Eingang (46) hat, der an einer Leitung der Stromschleife angeschlossen ist, wobei ein Ausgang mit dem zweiten Anschluß (32) der Mikroprozessoreinrichtung (18) verbunden ist, um die seriellen Kommunikationsspannungsimpulse aufzubringen, und wobei ein zweiter Eingang (48) angeschlossen ist bzw. angeschlossen werden kann an eine Quelle fester Spannung auf einem ausgewählten kleinen Wert, wodurch Modulationen des ausgewählten Spannungswertes durch den digitalen Schaltkreis (24) die Bildung größerer Spannungsimpulse bewirkt, welche die seriellen Kommunikationsspannungsimpulse der Mikroprozessoreinrichtung (18) bilden.

2. Stromschleifenanordnung nach Anspruch 1, wobei das Interface einen Spannungsteiler einschließt, der an den zweiten Eingang (48) des Verstärkers (44) angeschlossen ist und aus zumindest zwei Widerständen (R2, R3) besteht, und wobei ein weiterer Widerstand (R1) zwischen dem ersten Eingang (46) des Verstärkers (44) und Erde geschaltet ist.

3. Stromschleifenanordnung nach Anspruch 1 oder 2, einschließlich eines Tiefpaßfilters (36), welcher zwischen dem ersten Anschluß (30) der Mikroprozessoreinrichtung (18) und dem Eingang des Stromregelschaltkreises (40) angeschlossen ist.

## FIG. 1

## FIG. 2

[TRANSMITTER (COMMUNICATION INTERFACE AND MICROPROCESSOR)] 10